# EUROPEAN PATENT APPLICATION

(11) **EP 3 552 954 A1**
(43) Date of publication of application: **16.10.2019**
(21) Application number: 18305418.8
(22) Date of filing: 10.04.2018
(51) Int. Cl.: B64C 11/20, B64D 15/12

(54) **PROPELLER BLADE**

(71) Applicant: Ratier-Figeac SAS, 46100 Figeac Cedex (FR)
(72) Inventor: PICARD, Pierre-Alex, 46100 Figeac (FR); SEMINEL, Bruno, 46100 Figeac (FR)
(74) Representative: Dehns

(57) **Abstract**

A propeller blade (10) comprises an airfoil (20) having an airfoil core (22) comprising a radially inner base (24), a radially outer tip (26) and a leading edge (28), a root (30) extending from the base (24) of the airfoil core (22) for attaching the airfoil (20) to a hub and a thermally conductive sheath (40) attached to the leading edge (28) of the airfoil core (22) and extending from the base (24) to the tip (26) of the airfoil core (22). An electric heater (60) is arranged between the airfoil core (22) and the thermally conductive sheath (40) in at least a radially inner portion (50) of the leading edge (28). An erosion resistant coating (90) is provided only on a radially outer portion (80) of the thermally conductive sheath adjacent the tip (26).

## Description

### TECHNICAL FIELD

The present disclosure relates to propeller blades.

### BACKGROUND

Leading edges of propeller blades are typically heated to avoid accumulation of ice on the leading edge. In a known blade, a heating element is sandwiched between a core of the propeller blade and a leading edge sheath, for example of metal. The sheath allows heat from the heating element to flow easily to the external surface of the propeller blade to avoid icing or de-icing.

Propeller blade leading edges are also subject to erosion due to the speed of revolution of the blade and the speed of the aircraft on which it is mounted. Erosion may occur from various sources such as sand, rain, dust, stones or other foreign objects. This may prove deleterious to any metallic leading edge sheath.

### SUMMARY

From a first aspect, the disclosure provides a propeller blade comprising an airfoil having an airfoil core comprising a radially inner base, a radially outer tip and a leading edge and a root extending from the base of the airfoil core for attaching the airfoil to a hub. A thermally conductive sheath is attached to the leading edge of the airfoil core and extends from the base to the tip of the airfoil core. An electric heater is arranged between the airfoil core and the thermally conductive sheath in at least a radially inner portion of the leading edge. An erosion resistant coating is provided only on a radially outer portion of the thermally conductive sheath adjacent the tip.

The thermally conductive sheath may have a thermal conductivity of at least 5W/m/K, for example at least 10W/m/K.

In some embodiments, the erosion resistant coating and the electric heater may overlap radially.

In other embodiments, the erosion resistant coating and the electric heater may be radially contiguous.

The electric heater may extend over at least 40% of the span of the propeller blade from the base towards the tip, for example up to 50%, for example up to 60%, of the span of the propeller blade from the base towards the tip.

The erosion resistant coating may extend radially inwardly to a maximum of 60% of the span of the propeller blade from the tip towards the base.

In certain embodiments, the erosion resistant coating may extend radially inwardly over at least 40% of the span of the propeller blade from the tip towards the base, for example up to 50% of the span of the propeller blade from the tip towards the base.

The thermally conductive sheath may be made from stainless steel, nickel, titanium or an alloy containing one or more of the above.

The erosion resistant coating may have a thickness of 0.1 to 1.5mm, for example 0.3 to 1.0mm.

In certain embodiments, the erosion resistant coating may be a cermet material or a ceramic material.

In other embodiments, the erosion resistant coating may be a Ni-Co alloy.

The disclosure also provides a method of manufacturing a propeller blade comprising attaching to the leading edge of an airfoil core comprising a radially inner base, a radially outer tip and a leading edge, a root extending from the base of the airfoil core for attaching the airfoil to a hub, a thermally conductive sheath extending from the base to the tip of the airfoil core and an electric heater positioned between the airfoil core and the thermally conductive sheath in at least a radially inner portion of the leading edge, and depositing an erosion resistant coating only on a radially outer portion of the thermally conductive sheath.

The erosion resistant coating may be deposited on the sheath prior to attaching the sheath to the leading edge of the airfoil core.

The erosion resistant coating may be deposited on the sheath by means of a thermal spraying technique.

Alternatively, the erosion resistant coating may be deposited on the sheath by means of an electro-deposition technique.

### BRIEF DESCRIPTION OF THE DRAWINGS

An embodiment of the disclosure will now be described, by way of example only, with reference to the accompanying drawings in which:
Figure 1 shows a propeller blade in accordance with the disclosure;
Figure 2 shows an exploded view of the propeller blade of Figure 1;
Figure 3 shows a cross section taken along line III-III of Figure 1; and
Figure 4 shows a cross section taken along line IV-IV of Figure 1

### DETAILED DESCRIPTION

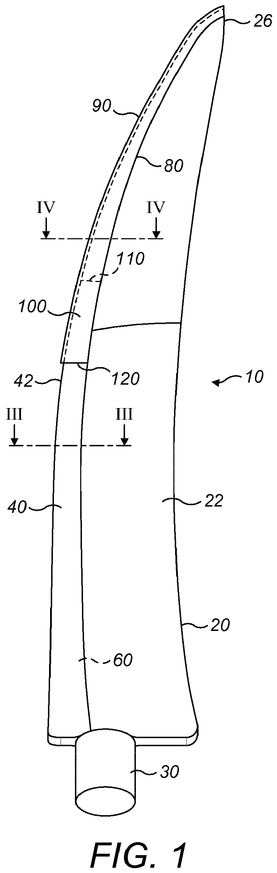

Figure 1 shows a propeller blade 10 that may be mounted to a rotor hub (not shown) with further propeller blades to form a propeller for a turboprop engine for an aircraft, for example.

The propeller blade 10 includes an airfoil 20 having an airfoil core 22 and a root 30 extending from the airfoil core 22 for attaching the blade 20 to a hub (not shown) as described above. The airfoil 22 may be of a composite structure, as is known in the art.

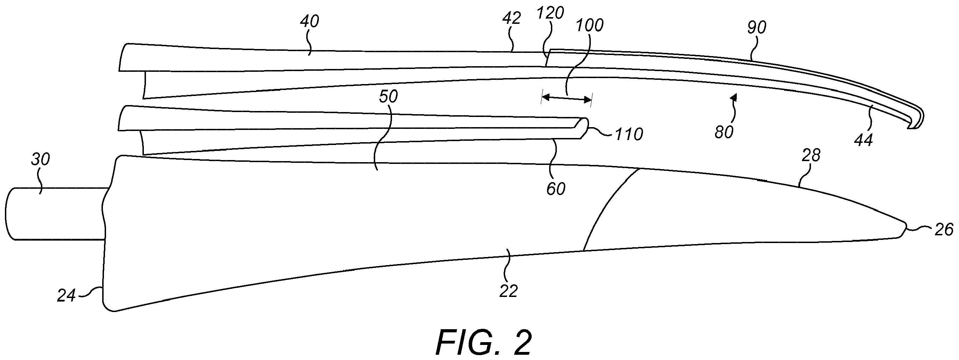

As can be seen from Figure 2, the airfoil core 22 includes a radially inner base 24 at an end adjacent the root 30 and a radially outer tip 26 at an opposed end. The radially inner base 24 and radially outer tip 26 define a span of the airfoil core 22 therebetween. The airfoil core 22 further includes a leading edge 28 extending along the span of the airfoil core 22 from the base 24 to the tip 26.

The propeller blade 10 further includes a sheath 40 mounted to the leading edge 28 of the airfoil core 22. In this embodiment the sheath 40 may be attached to the airfoil 22 by adhesive bonding, for example using a structural adhesive such as epoxy adhesive. In alternative embodiments, the sheath 40 may be attached to the airfoil 22 during curing of the airfoil 22. The sheath 40 is made from a thermally conductive material. In embodiments, sheath 40 may have a thermal conductivity of at least 5 W/m/K , for example at least 10 W/m/K.

The sheath may be metallic, for example of stainless steel, nickel, titanium or an alloy containing one or more of these metals. The sheath 40 may be formed from multiple parts or may be unitary, formed from a single piece of metal, for example.

As shown in Figure 2, the sheath 40 has a convex outer surface 42 and a concave inner surface 44 and a length. The inner surface 44 of the sheath 40 is attached to the leading edge 28 of the airfoil core 22. The curvature of the outer and inner surfaces 42, 44 corresponds substantially to the curvature of the leading edge 28 of the airfoil core 22. The length of the sheath 40 is substantially equal to the length of the airfoil core 22 such that, when attached to the airfoil core 22, the sheath 40 extends from the base 24 up to and over the tip 26 of the airfoil core 22, i.e. along substantially the entire span of the airfoil core 22 and over the entire tip 26. The width of the sheath 40 may vary along the span of the airfoil 22, as shown.

The sheath 40 may be electrically grounded to the root 30 or hub by a conductive element (not shown) as is known in the art.

The outer surface 42 of the sheath 40 may be flush with an outer surface of the airfoil core 22 to provide a smooth and continuous surface of the blade 10 so that the sheath 40 has minimal impact on the aerodynamic properties of the propeller blade assembly 10. The smooth surface may be achieved by reducing the thickness of the sheath 40 along its side edges and/or providing a recess in the airfoil core surface for receiving the sheath 40.

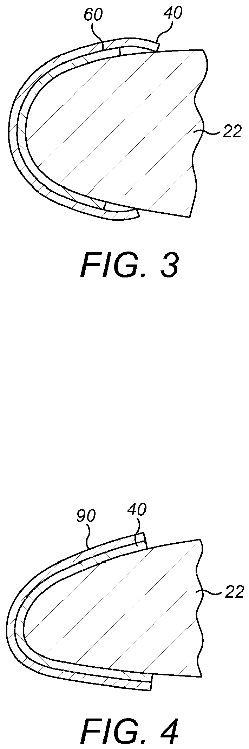

As shown in Figures 2 and 3, the propeller blade 10 also includes one or more heaters 60 arranged between the sheath 40 and the airfoil core 22 in only a radially inner portion 50 of the leading edge 28. The heater 60 is only shown schematically in the Figures and the heater 60 may be of any suitable construction. For example, the heaters 60 may comprise a mat or pad having heating elements or resistance wires therein to provide heat to the sheath 40. However, other constructions may be used. The heater 60 may, in other embodiments be formed on one or other of the airfoil core 22 and the sheath 40, or attached thereto prior to attachment of the sheath 40 to the airfoil core 22.

As shown, the heating element 60 extends along only a portion of the airfoil core 22. In the embodiment shown the heating element 60 extends over approximately 50% of the span of the airfoil core 22 from the base portion 24 to the tip 26. However, in other embodiments, the heater 60 may extend for as little as 40% of the span or as much as 60%, for example 50% although these figures are not limiting and the area of the blade leading edge covered by the heater 60 may vary depending on the blade 10.

The heater 60 may heat an interface between accreted ice and the sheath 40 to debond the ice and shed it by centrifugal load or alternatively the heater 60 may prevent ice from forming on the propeller blade 20 at all.

In use, the propeller blade 10 may be subject to foreign object damage and erosion. While the materials chosen for the sheath 40 for its thermal conductivity may provide some resistance to erosion, it has been recognised that such resistance is not optimal. Accordingly, as shown in Figures 1, 3 and 4, a radially outer portion 80 of the sheath 40 is provided with an erosion resistant coating 90. The coating 90 is provided only in the radially outer portion 80 of the sheath 40 as the rotational velocity of the blade 10 at radially inner portions 50 of the blade will not be as high as at the tip 26, such that the sheath 40 itself will provide adequate erosion protection in this region.

The erosion resistant coating 90 may extend radially inwardly over at least 40% of the span of the propeller blade 10 from the tip 26 towards the base 24. In some embodiments, it may extend up to 50% or even 60% of the span of the propeller blade 10 from the tip 26 towards the base 24. The radial extent of the coating 90 can be determined appropriately for any particular application.

It will be recognised therefore that the heater 60 and the erosion resistant coating 90 may overlap radially in only a central region 100 of the blade 10. For example the overlap may extend from 5-15% of the span of the propeller blade 10, for example 5-10% of the span.

In other embodiments, the heater 60 and the erosion resistant coating 90 may not overlap radially. There may thus be a radial space between the radially outer end 110 of the heater 60 and the radially inner end 120 of the erosion resistant coating 90. Alternatively, the heater 60 and the erosion resistant coating 90 may be contiguous such that they do not overlap, but there is no radial spacing between them. Having some degree of overlap or contiguity between the heater 60 and the erosion resistant coating 90 may be desirable.

The erosion resistant coating 90 may extend over the entire external surface 42 of the sheath 40 in the deposited region. In other embodiments, however, the erosion resistant coating 90 may extend over only a portion of the external surface 42 of the sheath 40, for example only around a leading edge portion thereof.

The erosion resistant coating 90 may have a thickness of, for example, 0.1 to 1.5mm. In some embodiments the thickness may be 0.3 to 1.0mm. The coating 90 may be of constant thickness or vary. The particular thickness will be chosen as appropriate for any particular application.

The erosion resistant coating 90 may be made of any suitable material. Examples of erosion resistant materials are cermet (ceramic-metal) materials, ceramic materials and hard metallic materials, for example Ni-Co alloys.

Depending on the particular materials used, the erosion resistant coating 90 may be applied to the sheath 40 by a number of techniques, for example a thermal spraying technique (hot or cold spraying) or an electro-deposition technique.

The erosion resistant coating 90 may advantageously be applied to the sheath 40 prior to the attachment of the sheath 40 to the airfoil core 22. This may facilitate the deposition of the erosion resistant coating 90.

In manufacturing the propeller blade 10, the heaters 60 may be attached to or formed on the sheath 40 prior to assembly to the airfoil core 22 such that the sheath 40 and heaters 60 form a sub assembly. Alternatively the sheath 40 and heaters 60 may be mounted to the airfoil core leading edge 28 as separate parts, either at the same time or in sequence.

Once the blade 10 has been manufactured, the root 30 of the blade 10 may be attached to the hub of a propeller for rotation with the hub. The blade may be mounted for rotation about a blade axis such that the pitch of the airfoil 10 relative to the hub can be adjusted

The disclosure provides a propeller blade 10 which potentially optimises the de-icing capability and erosion resistance of the blade. The thermally conductive sheath 40 conducts heat from the heater 60 in the radially inner region 50 of the airfoil core 22 in an optimal manner, while the erosion resistant coating 90 in the radially outer portion 80 of the sheath provides additional erosion resistance to the sheath 40 where it is required without compromising the de-icing capability of the sheath 40.

It will be appreciate that the above embodiment is merely exemplary and does not limit the scope of the disclosure. Modifications to the embodiment which fall within the scope of the disclosure will be apparent to the skilled person.

## Claims

1. A propeller blade (10) comprising:
an airfoil (20) having an airfoil core (22) comprising a radially inner base (24), a radially outer tip (26) and a leading edge (28);
a root (30) extending from the base (24) of the airfoil core (22) for attaching the airfoil (20) to a hub;
a thermally conductive sheath (40) attached to the leading edge (28) of the airfoil core (22) and extending from the base (24) to the tip (26) of the airfoil core (22); and
an electric heater (60) arranged between the airfoil core (22) and the thermally conductive sheath (40) in at least a radially inner portion (50) of the leading edge (28);
further comprising an erosion resistant coating (90) only on a radially outer portion (80) of the thermally conductive sheath adjacent the tip (26).

2. The propeller blade of claim 1, wherein the thermally conductive sheath (40) has a thermal conductivity of at least 5W/m/K, for example at least 10W/m/K.

3. The propeller blade of claim 1 or 2, wherein the erosion resistant coating (90) and the electric heater (60) overlap radially.

4. The propeller blade of claim 1 or 2, wherein the erosion resistant coating (90) and the electric heater (60) are radially contiguous.

5. The propeller blade of any preceding claim, wherein the electric heater (60) extends over at least 40% of the span of the propeller blade (10) from the base (24) towards the tip (26), for example up to 50%, for example up to 60% of the span of the propeller blade (10) from the base (24) towards the tip (26).

6. The propeller blade of any preceding claim, wherein the erosion resistant coating (90) extends radially inwardly to a maximum of 60% of the span of the propeller blade (10) from the tip (26) towards the base (24).

7. The propeller blade of claim 6, wherein the erosion resistant coating (90) extends radially inwardly over at least 40% of the span of the propeller blade (10) from the tip (26) towards the base (24), for example up to 50% of the span of the propeller blade (10) from the tip (26) towards the base (24).

8. The propeller blade of any preceding claim, wherein the thermally conductive sheath (40) is made from stainless steel, nickel, titanium or an alloy containing one or more of the above.

9. The propeller blade of any preceding claim, wherein the erosion resistant coating (90) has a thickness of 0.1 to 1.5mm, for example 0.3 to 1.0mm.

10. The propeller blade of any preceding claim, wherein the erosion resistant coating (90) is a cermet material or a ceramic material.

11. The propeller blade of any of claims 1 to 9, wherein the erosion resistant coating (90) is a Ni-Co alloy.

12. A method of manufacturing a propeller blade comprising:
attaching a thermally conductive sheath (40) and an electric heater (60) to the leading edge (28) of an airfoil core (22) comprising a radially inner base (24), a radially outer tip (26) and a leading edge (28), a root (30) extending from the base (24) of the airfoil core (22) for attaching the airfoil (20) to a hub; the thermally conductive sheath (40) extending from the base (24) to the tip (26) of the airfoil core (22);
the electric heater (60) positioned between the airfoil core (22) and the thermally conductive sheath (40) in at least a radially inner portion (50) of the leading edge (28); and
depositing an erosion resistant coating (90) only on a radially outer portion (80) of the thermally conductive sheath (40).

13. The method of claim 12, wherein the erosion resistant coating (90) is deposited on the sheath (40) prior to attaching the sheath (40) to the leading edge (28) of the airfoil core (22).

14. The method of claim 12 or 13, wherein the erosion resistant coating (90) is deposited on the sheath (40) by means of a thermal spraying technique.

15. The method of claim 12 or 13, wherein the erosion resistant coating (90) is deposited on the sheath (40) by means of an electro-deposition technique.
